# EUROPEAN PATENT APPLICATION

(11) **EP 4 488 772 A2**
(43) Date of publication of application: **08.01.2025**
(21) Application number: 24183171.8
(22) Date of filing: 19.06.2024
(51) Int. Cl.: G05B 13/04, F27D 19/00, F27D 21/00, G05B 19/418

(54) **METHOD AND SYSTEM AND FORECASTING AND DIAGNOSING ACCRETION IN ROTARY KILN**

(30) Priority: 02.07.2023 IN 202321044277
(71) Applicant: Tata Consultancy Services Limited, Maharashtra (IN)
(72) Inventor: DEODHAR, ANIRUDH, 411006 Pune- Maharashtra (IN); SINGHAL, TANMAYA, 411057 Pune - Maharashtra (IN); PATEL, JANAK MAHESHBHAI, 411013 Pune- Maharashtra (IN); JADHAV, VISHAL SUDAM, 411006 Pune - Maharashtra (IN); RUNKANA, VENKATARAMANA, 411013 Pune - Maharashtra (IN)
(74) Representative: Goddar, Heinz J.

(57) **Abstract**

Current approaches for identifying accretion in rotary kiln lack access to information regarding the internal condition of the rotary kiln such as temperatures of the wall, gas or solid bed and specific methodology that is required to calculate accretion and hence forecast. Present disclosure provides method and system for forecasting and diagnosing accretion in rotary kiln. The system first takes historical data associated with rotary kiln, real-time data, and a future time horizon information. Then, system predicts accretion scores for future time horizon based on received data using a pretrained accretion forecasting model which are further utilized to estimate a rate of accretion. Thereafter, the system identifies high accretion (HA) operating regime and low accretion (LA) operating regime over predefined time period. Further, system identifies one or more accretion variables responsible for causing each of the HA operating regime and the LA operating regime using an accretion diagnostic model.

## Description

### CROSS-REFERENCE TO RELATED APPLICATIONS AND PRIORITY

The present application claims priority to Indian application no. 202321044277, filed on July 02, 2023.

### TECHNICAL FIELD

The disclosure herein generally relates to rotary kiln optimization, and, more particularly, to a method and a system for forecasting and diagnosing accretion in rotary kiln.

### BACKGROUND

A rotary kiln is a pyro-processing device that is used to raise materials to a high temperature in a continuous process. The kiln is basically a cylindrical vessel, which is inclined slightly on the horizontal axis so that it can slowly rotate about its axis. The material to be processed in the rotary kiln is fed into an upper end of the cylinder. As the rotary kiln rotates, material gradually moves down towards the lower end, and may undergo a certain amount of mixing. Hot gases are passed along the kiln, sometimes in the same direction as the process material, but usually in the opposite direction. The hot gases may be generated in an external furnace, or may be generated by a flame inside the rotary kiln. In particular, the flame is projected from a burner-pipe which acts like a large Bunsen burner. The fuel for this may be gas, oil or pulverized coal. The rotary kilns are extensively used in the cement, minerals, metals and chemical industries for various purposes.

The performance of the rotary kiln can be degraded by deposition inside kiln also referred as 'accretion'. The accretion basically hinders with the material flow happening inside the kiln, thus affecting the productivity of the plant and also lowers the quality of the material being produced. A kiln campaign life is defined as the maximum number of days of kiln in operation before being shut down due to accretion. Further, the reduction in the campaign life of the kiln due to accretion not only reduces its availability but it also adds to the maintenance costs as the rotary kiln needs to be cleaned frequently.

So, to improve the performance of the rotary kiln and the kiln campaign life, the accretion formation happening inside the rotary kiln needs to be controlled though it cannot be avoided completely. One way of controlling accretion is by manipulating the kiln operating variables, such as flow rates of raw material, fuels, and air as well as kiln rotation. Thus, detecting the current and estimating the future expected rise of accretion as a function of operating conditions is critical. In addition, the operating conditions or materials responsible for current and future rise in accretion need to be identified in real-time as this information is needed for optimizing the operation of the plant.

Some of the prior arts that are available typically use first-principle or fuzzy logic models for detecting accretion, which make lot of idealistic assumptions regarding working conditions, thereby making them unsuitable for continuously changing conditions and requirements. Few consider using advanced sensors for real-time monitoring of accretion. However, estimating the future progression of accretion and identifying the operating conditions and materials responsible for the progression can go a long way in optimizing the operation strategy of the kiln.

### SUMMARY

Embodiments of the present disclosure present technological improvements as solutions to one or more of the above-mentioned technical problems recognized by the inventors in conventional systems. For example, in one aspect, there is provided an automated method for forecasting and diagnosing accretion in a rotary kiln. The method comprises receiving, by an accretion forecasting and diagnostic system (AFDS) via one or more hardware processors, a historical data associated with a rotary kiln for a predefined time period, a real-time data associated with the rotary kiln, and a future time horizon information, wherein the future time horizon information comprises a future time horizon for which accretion forecast needs to be generated; pre-processing, by the AFDS via the one or more hardware processors, the historical data and the real-time data using one or more pre-processing techniques to obtain a pre-processed historical data and a preprocessed real-time data, respectively; predicting, by the AFDS via the one or more hardware processors, one or more accretion scores for the future time horizon based on the pre-processed historical data and the preprocessed real-time data using a pretrained accretion forecasting model; estimating, by the AFDS via the one or more hardware processors, a rate of accretion based, at least in part, on the predicted one or more accretion scores, the historical accretion scores for the predefined time period and the real-time accretion scores using a rate estimation technique; comparing, by the AFDS via the one or more hardware processors, the estimated rate of accretion with a predefined accretion threshold; identifying, by the AFDS via the one or more hardware processors, a high accretion (HA) operating regime and a low accretion (LA) operating regime over the predefined time period based on the comparison using the estimated rate of accretion; identifying, by the AFDS via the one or more hardware processors, one or more accretion variables responsible for causing each of the HA operating regime and the LA operating regime based on the historical data, the real-time data, and the one or more accretion scores for the future time horizon using an accretion diagnostic model; and displaying, by the SFES via the one or more hardware processors, the one or more accretion scores for the future time horizon, and the one or more accretion variables on a user device.

In an embodiment, the historical data for the predefined time period comprises one or more of: historical operational data for the predefined time period, historical material quality data for the predefined time period, historical kiln design data, historical kiln maintenance data for the predefined time period, historical kiln ambient condition information for the predefined time period, historical accretion probability scores for the predefined time period, and historical accretion scores for the predefined time period, and wherein the real-time data comprises one or more of: a real-time operational data, a real-time material quality data, a real-time kiln design data, a real-time kiln maintenance data, a real-time kiln ambient condition information, a real-time accretion probability score and a real-time accretion score.

In an embodiment, the pretrained accretion forecasting model is a deep learning forecasting model, and wherein the pretrained accretion forecasting model predicts one or more accretion probability scores for the future time horizon along with the one or more accretion scores.

In an embodiment, wherein the step of identifying, by the AFDS via the one or more hardware processors, the one or more accretion variables responsible for causing each of the HA operating regime and the LA operating regime based on the historical data and the one or more accretion scores for the future time horizon using the accretion diagnostic model comprises: identifying, by the AFDS via the one or more hardware processors, the one or more accretion variables responsible for causing each of the HA operating regime and the LA operating regime based on the historical data, the one or more accretion probability scores for the future time horizon and the one or more accretion scores for the future time horizon using the accretion diagnostic model.

In an embodiment, the accretion diagnostic model is a data driven model.

In an embodiment, the HA operating regime comprises a time period where an average increase in the rate of accretion is above the predefined accretion threshold, and wherein the LA operating regime comprises a time period where the average increase in the rate of accretion is below the predefined accretion threshold.

In an embodiment, the one or more accretion variables comprise one or more of: kiln operating conditions, material quality measurements, and kiln ambient conditions.

In an embodiment, the method comprises: identifying, by the AFDS via the one or more hardware processors, one or more operable actions to be recommended to a user based on the one or more accretion scores for the future time horizon and the one or more accretion variables using a predefined action recommendation technique; and displaying, by the AFDS via the one or more hardware processors, the one or more operable actions on the user device, wherein the one or more operable actions comprises one or more of: rescheduling of maintenance of the rotary kiln, change in design of the rotary kiln, raw material used in the rotary kiln, and change in operation of the rotary kiln.

In another aspect, there is provided an accretion forecasting and diagnostic system for forecasting and diagnosis of accretion in rotary kiln. The system comprises a memory storing instructions; one or more communication interfaces; and one or more hardware processors coupled to the memory via the one or more communication interfaces, wherein the one or more hardware processors are configured by the instructions to: receive a historical data associated with a rotary kiln for a predefined time period, a real-time data associated with the rotary kiln, and a future time horizon information, wherein the future time horizon information comprises a future time horizon for which accretion forecast needs to be generated; pre-process the historical data and the real-time data using one or more pre-processing techniques to obtain a pre-processed historical data and a preprocessed real-time data, respectively; predict one or more accretion scores for the future time horizon based on the pre-processed historical data and the preprocessed real-time data using a pretrained accretion forecasting model; estimate a rate of accretion based, at least in part, on the predicted one or more accretion scores, the historical accretion scores for the predefined time period and the real-time accretion scores using a rate estimation technique; compare the estimated rate of accretion with a predefined accretion threshold; identify a high accretion (HA) operating regime and a low accretion (LA) operating regime over the predefined time period based on the comparison using the estimated rate of accretion; identify one or more accretion variables responsible for causing each of the HA operating regime and the LA operating regime based on the historical data, the real-time data, and the one or more accretion scores for the future time horizon using an accretion diagnostic model; and display the one or more accretion scores for the future time horizon, and the one or more accretion variables on a user device.

In an embodiment, the historical data for the predefined time period comprises one or more of: historical operational data for the predefined time period, historical material quality data for the predefined time period, historical kiln design data, historical kiln maintenance data for the predefined time period, historical kiln ambient condition information for the predefined time period, historical accretion probability scores for the predefined time period, and historical accretion scores for the predefined time period, and wherein the real-time data comprises one or more of: a real-time operational data, a real-time material quality data, a real-time kiln design data, a real-time kiln maintenance data, a real-time kiln ambient condition information, a real-time accretion probability score and a real-time accretion score.

In an embodiment, the pretrained accretion forecasting model is a deep learning based forecasting model, and wherein the pretrained accretion forecasting model predicts one or more accretion probability scores for the future time horizon along with the one or more accretion scores.

In an embodiment, for identifying the one or more accretion variables responsible for causing each of the HA operating regime and the LA operating regime based on the historical data and the one or more accretion scores for the future time horizon using the accretion diagnostic model, the one or more hardware processors are configured by the instructions to: identify the one or more accretion variables responsible for causing each of the HA operating regime and the LA operating regime based on the historical data, the one or more accretion probability scores for the future time horizon and the one or more accretion scores for the future time horizon using the accretion diagnostic model.

In an embodiment, the HA operating regime comprises a time period where an average increase in the rate of accretion is above the predefined accretion threshold, and wherein the LA operating regime comprises a time period where the average increase in the rate of accretion is below the predefined accretion threshold.

In an embodiment, the one or more accretion variables comprise one or more of: kiln operating conditions, material quality measurements, and kiln ambient conditions.

In an embodiment, the one or more hardware processors (204) are configured by the instructions to: identify one or more operable actions to be recommended to a user based on the one or more accretion scores for the future time horizon and the one or more accretion variables using a predefined action recommendation technique; and display the one or more operable actions on the user device, wherein the one or more operable actions comprises one or more of: rescheduling of maintenance of the rotary kiln, change in design of the rotary kiln, raw material used in the rotary kiln, and change in operation of the rotary kiln.

In yet another aspect, there are provided one or more non-transitory machine-readable information storage mediums comprising one or more instructions which when executed by one or more hardware processors cause forecasting and diagnosis of accretion in rotary kiln by receiving, by an accretion forecasting and diagnostic system (AFDS), a historical data associated with a rotary kiln for a predefined time period, a real-time data associated with the rotary kiln, and a future time horizon information, wherein the future time horizon information comprises a future time horizon for which accretion forecast needs to be generated; pre-processing, by the AFDS, the historical data and the real-time data using one or more pre-processing techniques to obtain a pre-processed historical data and a preprocessed real-time data, respectively; predicting, by the AFDS, one or more accretion scores for the future time horizon based on the pre-processed historical data and the preprocessed real-time data using a pretrained accretion forecasting model; estimating, by the AFDS, a rate of accretion based, at least in part, on the predicted one or more accretion scores, the historical accretion scores for the predefined time period and the real-time accretion scores using a rate estimation technique; comparing, by the AFDS, the estimated rate of accretion with a predefined accretion threshold; identifying, by the AFDS, a high accretion (HA) operating regime and a low accretion (LA) operating regime over the predefined time period based on the comparison using the estimated rate of accretion; identifying, by the AFDS, one or more accretion variables responsible for causing each of the HA operating regime and the LA operating regime based on the historical data, the real-time data, and the one or more accretion scores for the future time horizon using an accretion diagnostic model; and displaying, by the AFDS, the one or more accretion scores for the future time horizon, and the one or more accretion variables on a user device.

In an embodiment, the historical data for the predefined time period comprises one or more of: historical operational data for the predefined time period, historical material quality data for the predefined time period, historical kiln design data, historical kiln maintenance data for the predefined time period, historical kiln ambient condition information for the predefined time period, historical accretion probability scores for the predefined time period, and historical accretion scores for the predefined time period, and wherein the real-time data comprises one or more of: a real-time operational data, a real-time material quality data, a real-time kiln design data, a real-time kiln maintenance data, a real-time kiln ambient condition information, a real-time accretion probability score and a real-time accretion score.

In an embodiment, the pretrained accretion forecasting model is a deep learning based forecasting model, and wherein the pretrained accretion forecasting model predicts one or more accretion probability scores for the future time horizon along with the one or more accretion scores.

In an embodiment, the step of identifying, by the AFDS, the one or more accretion variables responsible for causing each of the HA operating regime and the LA operating regime based on the historical data and the one or more accretion scores for the future time horizon using the accretion diagnostic model comprises: identifying, by the AFDS, the one or more accretion variables responsible for causing each of the HA operating regime and the LA operating regime based on the historical data, the one or more accretion probability scores for the future time horizon and the one or more accretion scores for the future time horizon using the accretion diagnostic model.

In an embodiment, accretion diagnostic model is a data driven model.

In an embodiment, HA operating regime comprises a time period where an average increase in the rate of accretion is above the predefined accretion threshold, and wherein the LA operating regime comprises a time period where the average increase in the rate of accretion is below the predefined accretion threshold.

In an embodiment, the one or more accretion variables comprise one or more of: kiln operating conditions, material quality measurements, and kiln ambient conditions.

In an embodiment, the non-transitory machine-readable information storage mediums perform: identifying, by the AFDS, one or more operable actions to be recommended to a user based on the one or more accretion scores for the future time horizon and the one or more accretion variables using a predefined action recommendation technique; displaying, by the AFDS, the one or more operable actions on the user device, wherein the one or more operable actions comprises one or more of: rescheduling of maintenance of the rotary kiln, change in design of the rotary kiln, raw material used in the rotary kiln, and change in operation of the rotary kiln

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an example representation of a rotary kiln, related to at least some example embodiments of the present disclosure.
FIG. 2 is an example representation of an environment, related to at least some example embodiments of the present disclosure
FIG. 3 illustrates an exemplary block diagram of an accretion forecasting and diagnostic system, in accordance with an embodiment of the present disclosure.
FIGS. 4A and 4B, collectively, illustrate an exemplary flow diagram of a method for forecasting and diagnosing accretion in the rotary kiln, in accordance with an embodiment of the present disclosure.
FIG. 5 is a schematic representation of an accretion forecasting model, in accordance with an embodiment of the present disclosure.
FIG. 6 is a schematic representation of an accretion diagnostic model, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The use of rotary kiln is prevalent in multiple manufacturing industries, such as iron ore, cement, paper, lime, among others, where they play crucial role in elevating the temperatures of material during processes like calcination. As mentioned earlier, rotary kiln is a slightly inclined horizontal vessel which can rotate slowly around its longitudinal axis. At an upper end of a cylinder present in the rotary kiln, the feedstock material is introduced, and the material gradually descends toward lower end when the kiln slowly rotates around the axis. Further, when the hot gases travel along the kiln, the material undergoes heating. Hot gases typically move in the opposite direction (counter-current), although in some cases they may move in same direction (co-current). These hot gases are either produced by an external furnace or generated by the flame inside the kiln, which is created by a burner-pipe acting like a large Bunsen burner. The fuel source for the burner-pipe can be gas, oil or pulverized coal.

During the rotary kiln operation, material may accumulate on the interior walls of the rotary kiln due to operating conditions or other factors. This accumulation of material, also referred to as accretion, presents a particularly challenging problem for manufacturing industries. Over time, the thickness of accretion layer increases, resulting in reduced production capacity which sometimes leads to shutdown resulting in significant revenue losses.

Available systems lack access to information regarding the internal condition of the rotary kiln such as the temperatures of the wall, gas or solid bed and specific methodology that is required to calculate the accretion happening in the rotary kiln.

Thus, there is no known straightforward and computational way to forecast potential progression of accretion in rotary kiln which further helps in performing predictive maintenance of the rotary kiln. Additionally, no available techniques can diagnose and localize top causes of acceleration of accretion happening in accretion in real-time.

Embodiments of the present disclosure overcome the above-mentioned disadvantages by providing a method and a system for diagnosing and forecasting accretion in rotary kiln. The system of the present disclosure works on an assumption that a decrease in heat transfer coefficient between gas and a wall inside the rotary kiln is an indication of accretion as accretion on the wall increase resistance to heat transfer. So, the system first receives historical data associated with a rotary kiln for a predefined time period, a real-time data associated with the rotary kiln, and a future time horizon information. Then, the system predicts accretion scores for the future time horizon based on the received data using a pretrained accretion forecasting model which are further utilized to estimate a rate of accretion. Thereafter, the system identifies a high accretion (HA) operating regime and a low accretion (LA) operating regime over the predefined time period based on a comparison of the estimated rate of accretion with a predefined accretion threshold. Further, the system identifies one or more accretion variables responsible for causing each of the HA operating regime and the LA operating regime based on the received data and the accretion scores for the future time horizon using an accretion diagnostic model.

In the present disclosure, the system and the method uses the accretion forecasting model and the accretion diagnostic model for generating real-time forecast of future progression of accretion as a function of current and past operating conditions, thereby ensuring improved decision-making with respect to operation and maintenance. The system and the method provides real-time diagnosis of the expected rise in accretion i.e., reasons behind the rise in accretion as well the operable actions that can be performed to minimize the rate of accretion, thereby reducing the dependence on operator expertise and the overall time taken by the operators to optimize the parameters of the rotary kiln.

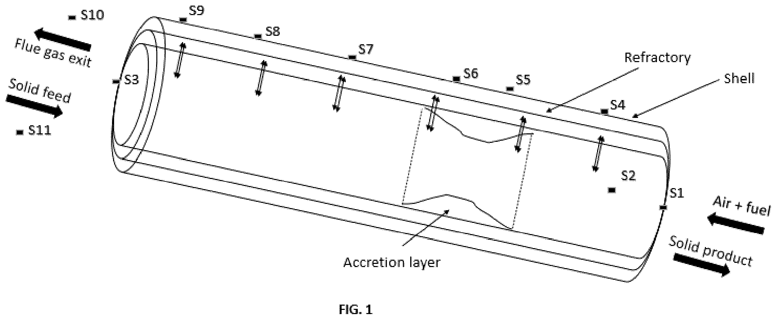

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 illustrates an exemplary representation of a rotary kiln, in accordance with an embodiment of the present disclosure.

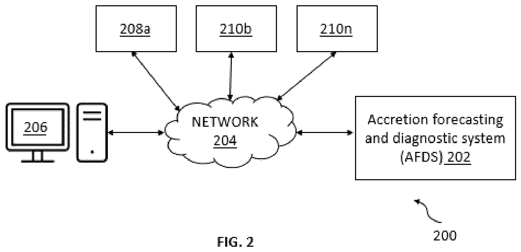

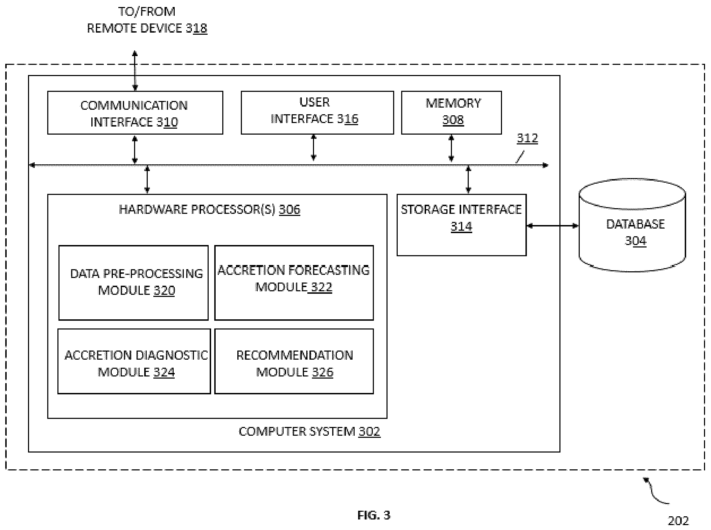

As seen in FIG. 1, the rotary kiln includes a plurality of sensors S1-S11 for measuring a plurality of variables, such as kiln temperature, pressure, flow etc., along with a plurality of other components. In an embodiment, one or more parameters measured by plurality of sensors S1-S11 are provided as input to an accretion forecasting and diagnostic system (explained with reference to FIGS. 2 and 3) that performs forecasting and diagnosis of accretion in the rotary kiln.

FIG. 2 illustrates an exemplary representation of an environment 200 related to at least some example embodiments of the present disclosure. Although the environment 200 is presented in one arrangement, other embodiments may include the parts of the environment 200 (or other parts) arranged otherwise depending on, for example, computing accretion scores, estimating rate of accretion, identifying high accretion and low accretion operating regime etc. The environment 200 generally includes the accretion forecasting and diagnostic system 202, an electronic device 206 (hereinafter also referred as a user device 206), and a plurality of data sources 208a-208n, each coupled to, and in communication with (and/or with access to) a network 204. It should be noted that one user device is shown for the sake of explanation; there can be more number of user devices.

The network 204 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 2, or any combination thereof.

Various entities in the environment 200 may connect to the network 204 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The user device 206 is associated with a user (e.g., a kiln operator/plant engineer) who is responsible for managing rotary kiln. Examples of the user device 206 include, but are not limited to, a personal computer (PC), a mobile phone, a tablet device, a Personal Digital Assistant (PDA), a server, a voice activated assistant, a smartphone, and a laptop.

The accretion forecasting and diagnostic system (hereinafter referred as `AFDS') 202 includes one or more hardware processors and a memory. The AFDS 202 is first configured to receive historical data associated with a rotary kiln for a predefined time period, a real-time data associated with the rotary kiln, and a future time horizon information via the network 204 from the plurality of data sources 208a-208n. In an embodiment, the plurality of data sources 208a-208n may include, but are not limited to, distributed control system (DCS), historian, laboratory information management system (LIMS), manufacturing execution systems (MES), accretion monitoring system, manual input etc. The historical data for the predefined time period includes one or more of historical operational data for the predefined time period, historical material quality data for the predefined time period, historical kiln design data, historical kiln maintenance data for the predefined time period, historical kiln ambient condition information for the predefined time period, historical accretion probability scores for the predefined time period, and historical accretion scores for the predefined time period. The real-time data comprises one or more of a real-time operational data, a real-time material quality data, a real-time kiln design data, a real-time kiln maintenance data, a real-time kiln ambient condition information, a real-time accretion probability score and a real-time accretion score. The future time horizon information includes a future time horizon for which accretion forecast needs to be generated.

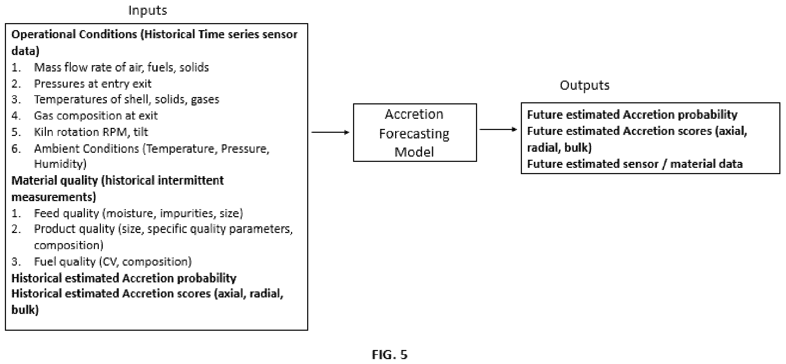

The AFDS 202 then pre-process the historical data and the real-time data to obtain a pre-processed historical data and a preprocessed real-time data which is then provided to a pretrained accretion forecasting model (shown with reference to FIG. 5) that predicts one or more accretion scores for the future time horizon. Further, the AFDS 202 estimates a rate of accretion based on the predicted one or more accretion scores, the historical accretion scores for the predefined time period and the real-time accretion score using a rate estimation technique. The estimated rate of accretion is then compared with a predefined accretion threshold.

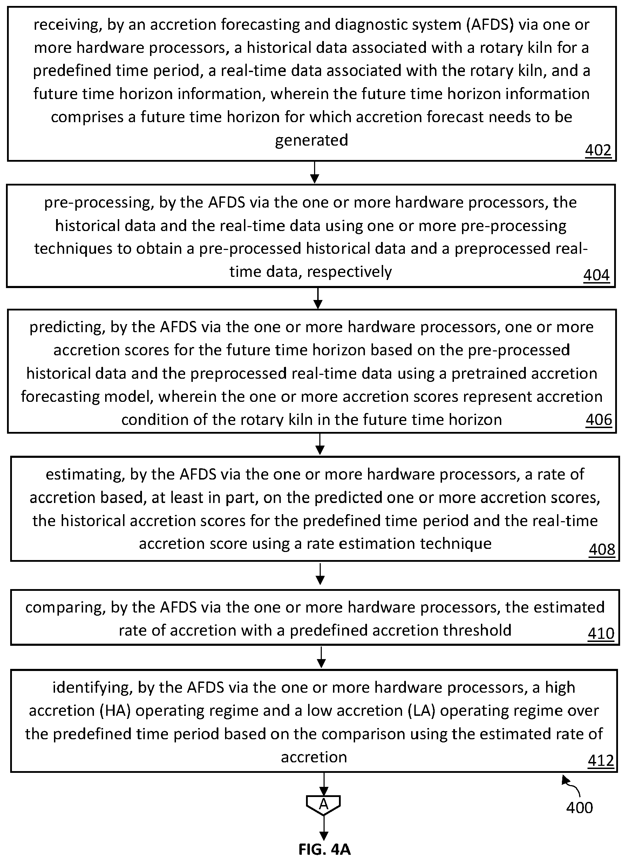

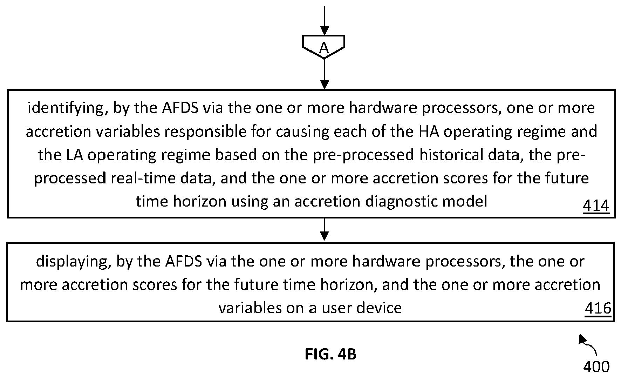

Upon determining the estimated rate of accretion is greater than the predefined accretion threshold, the AFDS 202 identifies a high accretion (HA) operating regime and a low accretion (LA) operating regime over the predefined time period using the estimated rate of accretion. Then, the AFDS 202 identifies one or more accretion variables responsible for causing each of the HA operating regime and the LA operating regime based on the pre-processed historical and real-time data, and the one or more accretion scores for the future time horizon using an accretion diagnostic model. Finally, the AFDS 202 displays one or more accretion scores for the future time horizon, and the one or more accretion variables on a user device, such as the user device 206. The one or more accretion scores represent accretion condition of the rotary kiln in the future time horizon. The one or more accretion variables represents variables that are responsible for causing accretion in the rotary kiln. The one or more accretion variables comprise one or more of kiln operating conditions, material quality measurements, and kiln ambient conditions. The process of forecasting and diagnosing accretion in a rotary kiln is explained in detail with reference to FIG. 4.

The number and arrangement of systems, devices, and/or networks shown in FIG. 2 are provided as an example. There may be additional systems, devices, and/or networks; fewer systems, devices, and/or networks; different systems, devices, and/or networks; and/or differently arranged systems, devices, and/or networks than those shown in FIG. 2. Furthermore, two or more systems or devices shown in FIG. 2 may be implemented within a single system or device, or a single system or device shown in FIG. 2 may be implemented as multiple, distributed systems or devices. Additionally, or alternatively, a set of systems (e.g., one or more systems) or a set of devices (e.g., one or more devices) of the environment 200 may perform one or more functions described as being performed by another set of systems or another set of devices of the environment 200 (e.g., refer scenarios described above).

FIG. 3 illustrates an exemplary block diagram of the accretion forecasting and diagnostic system 202 for diagnosing and forecasting accretion that can happen in a rotary kiln, in accordance with an embodiment of the present disclosure. In an embodiment, the AFDS 202 may also be referred as system 202 and may be interchangeably used herein. In some embodiments, the AFDS 202 is embodied as a cloud-based and/or SaaS-based (software as a service) architecture. In some embodiments, the AFDS 202 may be implemented in a server system. In some embodiments, the AFDS 202 may be implemented in a variety of computing systems, such as laptop computers, notebooks, hand-held devices, workstations, mainframe computers, and the like.

The system 202 includes a computer system 302 and a system database 304. The computer system 302 includes one or more processors 306 for executing instructions, a memory 308, a communication interface 310, and a user interface 316 that communicate with each other via a bus 312.

The memory 208 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the system database 304 can be stored in the memory 308, wherein the system database 304 may comprise, but are not limited to, historical data associated with a rotary kiln, real-time data of the rotary kiln, pre-processed historical data and real-time data, pre-processing algorithms, kiln operator knowledge, such as thumb rules, operation guidelines, failure model analysis rules, manual inputs, predefined accretion threshold, optimization models and their metadata, accretion forecasting model (shown in FIG. 5), rate estimation technique, accretion diagnostic model and the like. The memory 308 further comprises (or may further comprise) information pertaining to input(s)/output(s) of each step performed by the systems and methods of the present disclosure. In other words, input(s) fed at each step and output(s) generated at each step are comprised in the memory 308 and can be utilized in further processing and analysis.

In some embodiments, the system database 304 is integrated within computer system 302. For example, the computer system 302 may include one or more hard disk drives as the system database 304. A storage interface 314 is any component capable of providing the one or more processors 306 with access to the system database 304. The storage interface 314 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing the one or more processors 306 with access to the system database 304.

In some embodiment, the system database 304 is a combination of a plurality of databases, such as a model database, an equipment database, a material database, an equipment database, an operation data database, a processed data database, a maintenance database, an environment database, a knowledge database and the like.

The one or more processors 306 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory 308.

The one or more processors 306 are operatively coupled to the communication interface 310 such that the one or more processors 306 communicate with a remote system 318 such as, the user device 206, or communicated with any entity (for e.g., the data sources 208a-208n) connected to the network 204. Further, the one or more processors 306 are operatively coupled to the user interface 316 for interacting with users, such as the user/kiln operator of the plant who is responsible for operating and handling the rotary kilns present in an industrial plant.

In one embodiment, the one or more processors 306 includes a data pre-processing module 320, an accretion forecasting module 322, an accretion diagnostic module 324, and a recommendation module 326.

The data pre-processing module 320 includes suitable logic and/or interfaces for receiving the historical data associated with the rotary kiln for the predefined time period, and the real-time data associated with the rotary kiln from the plurality of data sources. The historical data comprises one or more of historical operational data for the predefined time period, historical material quality data for the predefined time period, historical kiln design data, historical kiln maintenance data for the predefined time period, historical kiln ambient condition information for the predefined time period, historical accretion probability scores for the predefined time period and historical accretion scores for the predefined time period. The real-time data includes one or more of a real-time operational data, a real-time material quality data, a real-time kiln design data, a real-time kiln maintenance data, a real-time kiln ambient condition information, a real-time accretion probability score and a real-time accretion score.

In an embodiment, the historical and the real-time operation data include, but are not limited to, mass flow rate of air, fuels and solids going into the rotary kiln, pressures at entry exit, temperatures of shell, solids and gases, gas composition at exit, kiln rotation Revolutions Per Minute (RPM), kiln tilt etc. The historical and the real-time material quality data include feed quality, such as moisture, impurities, size etc., product quality, such as size, specific quality parameters, composition etc., fuel quality, such as calorific value, composition etc. The historical and the real-time kiln design data include length and diameter of the rotary kiln, refractory, shell architecture, dimensions and the like. The historical and the real-time kiln maintenance data includes history of maintenance actions relevant to the rotary kiln and surrounding equipment. For instance, timeline of mechanical clean-up of accretion, or timeline of any intermediate modifications to upstream equipment, such as filters, or downstream equipment such as coolers, cyclones, electrostatic precipitators along with other details. The historical and the real-time kiln ambient condition information includes temperature, pressure and humidity details associated with the rotary kiln.

It should be noted that the historical accretion probability scores for the predefined time period, the historical accretion scores for the predefined time period, the real-time accretion probability score and the real-time accretion score can be obtained, without limiting the scope of the embodiments described herein, using any accretion monitoring technique available in the art or any advanced monitoring technique that can come up in future. In an embodiment, the historical accretion probability scores for the predefined time period, the historical accretion scores for the predefined time period, the real-time accretion probability score and the real-time accretion score can be obtained using an accretion probability estimation model and an accretion scoring model disclosed by Applicant in Indian patent application titled 'METHOD AND SYSTEM FOR MONITORING ACCRETION IN A ROTARY KII,N' .

The data pre-processing module 320 is then configured to perform pre-processing of the received historical data and the real-time data using one or more pre-processing techniques to obtain a pre-processed historical data and a preprocessed real-time data, respectively as some historical and the real-time data may require pre-processing to make them usable as per the requirement of the system 202. In an embodiment, the data pre-processing module 320, without limiting the scope of the embodiments disclosed herein, synchronizes the historical and the real-time data coming from the plurality of data sources at different frequencies, cleans the historical and the real-time data by removing outliers based on outlier removal model, augments the cleaned historical and the real-time data by imputation model and finally transforms the cleaned historical and the real-time data based on a transformation model. In one embodiment, the transformation of cleaned historical and the real-time data may involve processing of the cleaned historical and the real-time data at a certain frequency, numerical transformation and regime-based separation of the cleaned data. The regimes may be identified based on fuel quality, product quality, operating conditions and maintenance actions. In one embodiment, the data pre-processing module 320 stores the pre-processed historical and the real-time data in the system database 304.

The accretion forecasting module 322 includes suitable logic and/or interfaces for accessing the pre-processed historical and the real-time data that is stored in the system database 204. Once the pre-processed historical and the real-time data is available, the accretion forecasting module 322 is configured to predict one or more accretion scores for the future time horizon using a pretrained accretion forecasting model.

In particular, the accretion forecasting module 322 uses the historical operational data, the historical material quality data, the historically estimated accretions scores and the accretion probability scores and the real-time data to predict accretion scores for the future time horizon. The predicted one or more accretion scores represent an accretion condition of the rotary kiln in the future time horizon. It should be noted that the accretion forecasting module 322 also predicts one or more accretion probability scores for the future time horizon along with the one or more accretion scores.

In an embodiment, without limiting the scope of the embodiments described herein, the pretrained accretion forecasting model is a deep learning based forecasting model. In an embodiment, the pretrained accretion forecasting model is a combination of physics-based models, data-driven models and knowledge based models.

In at least one example embodiment, the one or more processors 306 estimate rate of accretion based on the predicted one or more accretion scores, the historical accretion scores for the predefined time period and the real-time accretion score using a rate estimation technique.

In an embodiment, the rate estimation technique comprises estimating rate of change in accretion based on the predicted, historical and real-time accretion scores. In an embodiment, the accretion rate can be calculated by determining a total change in accretion score over a given time interval. In another embodiment, specific statistics such as standard deviation, inter quartile range distribution of accretion score over the said time interval could be utilized for rate estimation. The accretion rate threshold can be predefined based on the historical data of the plant. For instance, a rate of increase of x units of accretion score over a time period y, can be predefined and then the estimated rate of accretion can be compared against the same.

Once the rate of accretion is available, the one or more processors 306 compares the estimated rate of accretion with a predefined accretion threshold. In case the rate of accretion score is less than the predefined accretion rate threshold, the one or more processors 306 receives the next set of inputs for the next time stamp based on a predefined execution frequency and use those inputs to perform the accretion forecasting and diagnosis.

If the rate of accretion is greater than the predefined accretion threshold, the one or more processors 306 identify a high accretion (HA) operating regime and a low accretion (LA) operating regime over the predefined time period using the estimated rate of accretion. In an embodiment, the HA operating regime includes a time period where an average increase in the rate of accretion is above the predefined accretion threshold. The LA operating regime includes a time period where the average increase in the rate of accretion is below the predefined accretion threshold.

In one embodiment, different HA and LA regimes as well as their accretion rate thresholds can be predefined based on different operating regimes of the rotary kiln (for example, different production rates, different fuels or raw material sources).

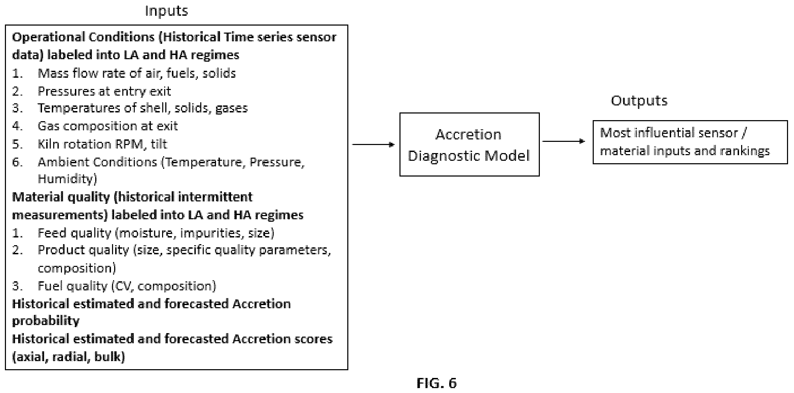

The accretion diagnostic module 324 is in communication with the accretion forecasting module. The accretion diagnostic module 324 includes suitable logic and/or interfaces for identifying one or more accretion variables responsible for causing each of the HA operating regime and the LA operating regime based on the pre-processed historical data, the pre-processed real-time data, and the one or more accretion scores for the future time horizon using an accretion diagnostic model (shown with reference to FIG. 6). In particular, the accretion diagnostic module 324 is configured to localize the root cause variables responsible for the HA and the LA periods of accretion evolution in the rotary kiln.

In an embodiment, the accretion diagnostic model, without limiting the scope of the disclosure, is a data driven model. In another embodiment, the accretion diagnostic model is a combination of physics-based models, data-driven models and knowledge based models.

The recommendation module 326 includes suitable logic and/or interfaces for recommending one or more operable actions that can be performed to minimize the rate of accretion in the future time horizon based on the accretion scores computed for the future time horizon by the accretion forecasting module 322 and the one or more accretion variables identified by the accretion diagnostic module 324 using a predefined action recommendation technique. In particular, the recommendation module 326 checks the future path of accretion estimated by the accretion forecasting module 322, and potential top contributors estimated by the accretion diagnostic module 324 to identify the right set of operable actions that, once performed by the user, can slow down the process of accretion.

In an embodiment, the predefined action recommendation technique is an algorithmic optimization technique known in the art. In another embodiment, the predefined action recommendation technique a knowledge-driven optimization technique.

In an embodiment, the recommendation module 226 is also configured to display the one or more operable actions on the user device. The one or more operable actions may include, but are not limited to, rescheduling of maintenance of the rotary kiln, change in design of the rotary kiln, raw material used in the rotary kiln, and change in operation of the rotary kiln. The user, upon viewing the one or more operable actions, may implement at least one operable action on the rotary kiln to improve the operation of the rotary kiln.

In at least one example embodiment, the recommendation module 226 may directly implement the one or more operable actions in the rotary kiln via its DCS.

In at least one example embodiment, the recommendation module 326 includes a simulator that enables a user to do what-if and if-what scenario analysis offline or online by accessing the pre-configured models, such as accretion forecasting model and accretion diagnostic model. The simulator helps the user in taking decisions in real-time.

It is noted that the system 202 as illustrated and hereinafter described is merely illustrative of an apparatus that could benefit from embodiments of the present disclosure and, therefore, should not be taken to limit the scope of the present disclosure. It is noted that the system 202 may include fewer or more components than those depicted in FIG. 2.

FIGS. 4A and 4B, with reference to FIGS. 1 through 3, collectively, represent an exemplary flow diagram of a method 400 for diagnosing and forecasting accretion in a rotary kiln, in accordance with an embodiment of the present disclosure. The method 400 may use the system 202 of FIG. 2 and FIG. 1 for execution. In an embodiment, the system 202 comprises one or more data storage devices or the memory 308 operatively coupled to the one or more hardware processors 306 and is configured to store instructions for execution of steps of the method 400 by the one or more hardware processors 306. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 202 as depicted in FIG. 2 and FIG. 3.

At step 402 of the method of the present disclosure, the one or more hardware processors 306 of the system 202 receive a historical data associated with a rotary kiln for a predefined time period, a real-time data associated with the rotary kiln, and a future time horizon information. The future time horizon information includes a future time horizon for which accretion forecast needs to be generated.

At step 404 of the method of the present disclosure, the one or more hardware processors 306 of the system 202 pre-process the historical data and the real-time data using one or more pre-processing techniques to obtain a pre-processed historical data and a preprocessed real-time data, respectively.

At step 406 of the method of the present disclosure, the one or more hardware processors 306 of the system 202 predict one or more accretion scores for the future time horizon based on the pre-processed historical data and the preprocessed real-time data using a pretrained accretion forecasting model. In particular, the pretrained accretion forecasting model receives the historical data over past time say *'h₀'* and predicts the future trends for a future time horizon *h.* It should be noted that the future time horizon h and past time window *h₀* are predetermined during the training of the accretion forecasting model. In an embodiment, the accretion forecasting model may also forecast other variables such as material or sensor related data past trends.

The one or more accretion scores represent accretion condition of the rotary kiln in the future time horizon. In particular, the one or more accretion scores predict future trends in accretion scores.

At step 408 of the method of the present disclosure, the one or more hardware processors 306 of the system 202 estimate a rate of accretion based, at least in part, on the predicted one or more accretion scores, the historical accretion scores for the predefined time period and the real-time accretion score using the rate estimation technique. In particular, rate of increase in one or more accretion scores A are calculated over past period *p* + future time horizon *h.* It should be noted that the past period *p* can be days, weeks or months and can be configured based on the accretion history and criticality of detection.

At step 410 of the method of the present disclosure, the one or more hardware processors 306 of the system 202 compares the estimated rate of accretion with a predefined accretion threshold. In particular, the calculated rate of accretion A is compared against a set accretion threshold 'λ'. If the rate of accretion is less than the accretion threshold, the step 402 is repeated at next instance (depending upon the execution frequency). If the rate of accretion scores is more than the predefined accretion threshold, the hardware processors 306 of the system 202 perform step 412.

At step 412 of the method of the present disclosure, the one or more hardware processors 306 of the system 202 identify a high accretion (HA) operating regime and a low accretion (LA) operating regime over the predefined time period based on the comparison using the estimated rate of accretion. A high accretion regime comprises a period where the average rate of accretion is above a higher threshold α. A low accretion regime comprises a period where the average rate of accretion is below a lower threshold β. The minimum length of a high or a low accretion regime µ can be configured based on a typical campaign life of the rotary kiln. For example, µ could be a continuous operation of more than 3 days.

At step 414 of the method of the present disclosure, the one or more hardware processors 306 of the system 202 identify one or more accretion variables responsible for causing each of the HA operating regime and the LA operating regime based on the pre-processed historical data, the pre-processed real-time data, and the one or more accretion scores for the future time horizon using an accretion diagnostic model (shown with reference to FIG. 6). As the pretrained accretion forecasting model predicts one or more accretion probability scores for the future time horizon along with the one or more accretion scores, so the one or more accretion probability scores are also used by the accretion diagnostic model for identifying the one or more accretion variables.

At step 416 of the method of the present disclosure, the one or more hardware processors 306 of the system 202 display the one or more accretion scores for the future time horizon, and the one or more accretion variables on a user device, such as the user device 206.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, prior arts that are available typically use first-principle or fuzzy logic models for detecting accretion, which make lot of idealistic assumptions regarding working conditions, thereby making them unsuitable for continuously changing conditions and requirements. Few arts consider using advanced sensors for real-time monitoring of accretion which increases the overall production cost. So, to overcome the disadvantages, embodiments of the present disclosure provide a method and a system for forecasting and diagnosing accretion in the rotary kiln. More specifically, the system and the method generates real-time forecast of future progression of accretion as a function of current and past operating conditions, thereby ensuring improved decision-making with respect to operation and maintenance. The system and the method provides real-time diagnosis of the expected rise in accretion i.e., reasons behind the rise in accretion as well the operable actions that can be performed to minimize the rate of accretion, thereby reducing the dependence on operator expertise and the overall time taken by the operators to optimize the parameters of the rotary kiln.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (400), comprising:
receiving, by an accretion forecasting and diagnostic system (AFDS) via one or more hardware processors, a historical data associated with a rotary kiln for a predefined time period, a real-time data associated with the rotary kiln, and a future time horizon information, wherein the future time horizon information comprises a future time horizon for which accretion forecast needs to be generated (402);
pre-processing, by the AFDS via the one or more hardware processors, the historical data and the real-time data using one or more pre-processing techniques to obtain a pre-processed historical data and a preprocessed real-time data, respectively (404);
predicting, by the AFDS via the one or more hardware processors, one or more accretion scores for the future time horizon based on the pre-processed historical data and the preprocessed real-time data using a pretrained accretion forecasting model, wherein the one or more accretion scores represent accretion condition of the rotary kiln in the future time horizon (406);
estimating, by the AFDS via the one or more hardware processors, a rate of accretion based, at least in part, on the predicted one or more accretion scores, the historical accretion scores for the predefined time period and the real-time accretion score using a rate estimation technique (408);
comparing, by the AFDS via the one or more hardware processors, the estimated rate of accretion with a predefined accretion threshold (410);
identifying, by the AFDS via the one or more hardware processors, a high accretion (HA) operating regime and a low accretion (LA) operating regime over the predefined time period based on the comparison using the estimated rate of accretion (412);
identifying, by the AFDS via the one or more hardware processors, one or more accretion variables responsible for causing each of the HA operating regime and the LA operating regime based on the pre-processed historical data, the pre-processed real-time data, and the one or more accretion scores for the future time horizon using an accretion diagnostic model (414); and
displaying, by the AFDS via the one or more hardware processors, the one or more accretion scores for the future time horizon, and the one or more accretion variables on a user device (416).

2. The processor implemented method as claimed in claim 1, wherein the historical data for the predefined time period comprises one or more of: historical operational data for the predefined time period, historical material quality data for the predefined time period, historical kiln design data, historical kiln maintenance data for the predefined time period, historical kiln ambient condition information for the predefined time period, historical accretion probability scores for the predefined time period and historical accretion scores for the predefined time period, and wherein the real-time data comprises one or more of: a real-time operational data, a real-time material quality data, a real-time kiln design data, a real-time kiln maintenance data, a real-time kiln ambient condition information, a real-time accretion probability score and a real-time accretion score.

3. The processor implemented method as claimed in claim 1, wherein the pretrained accretion forecasting model is a deep learning based forecasting model, and wherein the pretrained accretion forecasting model predicts one or more accretion probability scores for the future time horizon along with the one or more accretion scores.

4. The processor implemented method as claimed in claim 3, wherein the step of identifying, by the AFDS via the one or more hardware processors, the one or more accretion variables responsible for causing each of the HA operating regime and the LA operating regime based on the historical data and the one or more accretion scores for the future time horizon using the accretion diagnostic model comprises:
identifying, by the AFDS via the one or more hardware processors, the one or more accretion variables responsible for causing each of the HA operating regime and the LA operating regime based on the historical data, the one or more accretion probability scores for the future time horizon and the one or more accretion scores for the future time horizon using the accretion diagnostic model.

5. The processor implemented method as claimed in claim 1, wherein the accretion diagnostic model is a data driven model.

6. The processor implemented method as claimed in claim 1, wherein the HA operating regime comprises a time period where an average increase in the rate of accretion is above the predefined accretion threshold, wherein the LA operating regime comprises a time period where the average increase in the rate of accretion is below the predefined accretion threshold, and wherein the one or more accretion variables comprise one or more of: kiln operating conditions, material quality measurements, and kiln ambient conditions.

7. The processor implemented method as claimed in claim 1, comprising:
identifying, by the AFDS via the one or more hardware processors, one or more operable actions to be recommended to a user based on the one or more accretion scores for the future time horizon and the one or more accretion variables using a predefined action recommendation technique; and
displaying, by the AFDS via the one or more hardware processors, the one or more operable actions on the user device, wherein the one or more operable actions comprises one or more of: rescheduling of maintenance of the rotary kiln, change in design of the rotary kiln, raw material used in the rotary kiln, and change in operation of the rotary kiln.

8. An accretion forecasting and diagnostic system (202), comprising:
a memory (308) storing instructions;
one or more communication interfaces (310); and
one or more hardware processors (306) coupled to the memory (308) via the one or more communication interfaces (310), wherein the one or more hardware processors (306) are configured by the instructions to:
receive a historical data associated with a rotary kiln for a predefined time period, a real-time data associated with the rotary kiln, and a future time horizon information, wherein the future time horizon information comprises a future time horizon for which accretion forecast needs to be generated;
pre-process the historical data and the real-time data using one or more pre-processing techniques to obtain a pre-processed historical data and a preprocessed real-time data, respectively;
predict one or more accretion scores for the future time horizon based on the pre-processed historical data and the preprocessed real-time data using a pretrained accretion forecasting model, wherein the one or more accretion scores represent accretion condition of the rotary kiln in the future time horizon;
estimate a rate of accretion based, at least in part, on the predicted one or more accretion scores, the historical accretion scores for the predefined time period and the real-time accretion scores using a rate estimation technique;
compare the estimated rate of accretion with a predefined accretion threshold;
identify a high accretion (HA) operating regime and a low accretion (LA) operating regime over the predefined time period based on the comparison using the estimated rate of accretion;
identify one or more accretion variables responsible for causing each of the HA operating regime and the LA operating regime based on the pre-processed historical data, the pre-processed real-time data, and the one or more accretion scores for the future time horizon using an accretion diagnostic model; and
display the one or more accretion scores for the future time horizon, and the one or more accretion variables on a user device.

9. The accretion forecasting and diagnostic system (202) as claimed in claim 8, wherein the historical data for the predefined time period comprises one or more of: historical operational data for the predefined time period, historical material quality data for the predefined time period, historical kiln design data, historical kiln maintenance data for the predefined time period, historical kiln ambient condition information for the predefined time period, historical accretion probability scores for the predefined time period, and historical accretion scores for the predefined time period, and wherein the real-time data comprises one or more of: a real-time operational data, a real-time material quality data, a real-time kiln design data, a real-time kiln maintenance data, a real-time kiln ambient condition information, a real-time accretion probability score and a real-time accretion score.

10. The accretion forecasting and diagnostic system (202) as claimed in claim 8, wherein the pretrained accretion forecasting model is a deep learning based forecasting model, and wherein the pretrained accretion forecasting model predicts one or more accretion probability scores for the future time horizon along with the one or more accretion scores.

11. The accretion forecasting and diagnostic system (202) as claimed in claim 10, wherein for identifying the one or more accretion variables responsible for causing each of the HA operating regime and the LA operating regime based on the historical data and the one or more accretion scores for the future time horizon using the accretion diagnostic model, the one or more hardware processors (306) are configured by the instructions to:
identify the one or more accretion variables responsible for causing each of the HA operating regime and the LA operating regime based on the historical data, the one or more accretion probability scores for the future time horizon and the one or more accretion scores for the future time horizon using the accretion diagnostic model.

12. The accretion forecasting and diagnostic system (202) as claimed in claim 8, wherein the accretion diagnostic model is a data driven model.

13. The accretion forecasting and diagnostic system (202) as claimed in claim 8, wherein the HA operating regime comprises a time period where an average increase in the rate of accretion is above the predefined accretion threshold, wherein the LA operating regime comprises a time period where the average increase in the rate of accretion is below the predefined accretion threshold, and wherein the one or more accretion variables comprise one or more of: kiln operating conditions, material quality measurements, and kiln ambient conditions.

14. The accretion forecasting and diagnostic system (202) as claimed in claim 8, wherein the one or more hardware processors (306) are configured by the instructions to:
identify one or more operable actions to be recommended to a user based on the one or more accretion scores for the future time horizon and the one or more accretion variables using a predefined action recommendation technique; and
display the one or more operable actions on the user device, wherein the one or more operable actions comprises one or more of: rescheduling of maintenance of the rotary kiln, change in design of the rotary kiln, raw material used in the rotary kiln, and change in operation of the rotary kiln.

15. One or more non-transitory machine-readable information storage mediums comprising one or more instructions which when executed by one or more hardware processors cause:
receiving, by an accretion forecasting and diagnostic system (AFDS), a historical data associated with a rotary kiln for a predefined time period, a real-time data associated with the rotary kiln, and a future time horizon information, wherein the future time horizon information comprises a future time horizon for which accretion forecast needs to be generated;
pre-processing, by the AFDS, the historical data and the real-time data using one or more pre-processing techniques to obtain a pre-processed historical data and a preprocessed real-time data, respectively;
predicting, by the AFDS, one or more accretion scores for the future time horizon based on the pre-processed historical data and the preprocessed real-time data using a pretrained accretion forecasting model, wherein the one or more accretion scores represent accretion condition of the rotary kiln in the future time horizon;
estimating, by the AFDS, a rate of accretion based, at least in part, on the predicted one or more accretion scores, the historical accretion scores for the predefined time period and the real-time accretion score using a rate estimation technique;
comparing, by the AFDS, the estimated rate of accretion with a predefined accretion threshold;
identifying, by the AFDS, a high accretion (HA) operating regime and a low accretion (LA) operating regime over the predefined time period based on the comparison using the estimated rate of accretion;
identifying, by the AFDS, one or more accretion variables responsible for causing each of the HA operating regime and the LA operating regime based on the pre-processed historical data, the pre-processed real-time data, and the one or more accretion scores for the future time horizon using an accretion diagnostic model; and
displaying, by the AFDS, the one or more accretion scores for the future time horizon, and the one or more accretion variables on a user device.
